# EUROPÄISCHE PATENTSCHRIFT

(11) **EP 1 352 571 B1**
(45) Veröffentlichungstag und Bekanntmachung des Hinweises auf die Patenterteilung: **07.12.2005**
(21) Anmeldenummer: 02019597.0
(22) Anmeldetag: 03.09.2002
(51) Int. Cl.: A23L 3/01, A23L 1/01, H05B 6/80

(54) **Verfahren und Vorrichtung zur Erhitzung von in Trays eingesiegelten Fertiggerichten mit Mikrowellen**
Process and apparatus for microwave heating of readymade meals sealed in trays
Procédé et dispositif pour le chauffage à micro-ondes de repas prêts à la consommation renfermés dans des conteneurs

(30) Priorität: 09.04.2002 EP 02007906
(43) Veröffentlichungstag der Anmeldung: 15.10.2003
(73) Patentinhaber: Tops Foods N.V., 2250 Olen (BE)
(72) Erfinder: Tops, Rudy, 2260 Westerlo (BE)
(74) Vertreter: Junius, Walther

(56) Entgegenhaltungen:
- EP-A- 0 269 073
- EP-A- 0 344 408
- EP-A- 0 347 623
- US-A- 4 839 485
- SCHLEGEL W: "COMMERCIAL PASTEURIZATION AND STERILIZATION OF FOOD PRODUCTS USING MICROWAVE TECHNOLOGY" FOOD TECHNOLOGY, INSTITUTE OF FOOD TECHNOLOGISTS. CHICAGO, US, Bd. 46, Nr. 12, 1. Dezember 1992 (1992-12-01), Seiten 62-63, XP000331050 ISSN: 0015-6639
- "ADVANCES IN MICROWAVE FOOD PROCESSING" FOOD TECHNOLOGY, INSTITUTE OF FOOD TECHNOLOGISTS. CHICAGO, US, Bd. 46, Nr. 9, 1. September 1992 (1992-09-01), Seiten 118-123, XP000311048 ISSN: 0015-6639

## Beschreibung

Die Erfindung betrifft ein Verfahren und eine Vorrichtung zur Erhitzung von in Trays eingesiegelten Fertiggerichten mit Mikrowellen, bei dem die Trays in einen Autoklaven eingestellt werden, in den Mikrowellen aus Hohlleitern eingekoppelt werden, und bei dem die Trays in und/oder durch den Autoklaven bewegt werden.

In Betrieben zur Herstellung und Behandlung von in Trays eingesiegelten Fertiggerichten sind die auf Trays verzehrfertig gelagerten, aus Fleisch und Soße, Kartoffeln oder Nudeln sowie aus Gemüse bestehenden Portionen in Mikrowellenöfen durch Erhitzung zu sterilisieren und/ oder zu pasteurisieren, bevor sie für die Lagerhaltung einer Tiefkühlung unterzogen werden. Dabei ist sicherzustellen, daß diese portionierten,temperaturempfindlichen Produkte während der Behandlung in Erhitzungsanlagen, bestimmte Temperaturen nicht über- und nicht unterschreiten. Die in diesen Betrieben hierfür eingesetzten, meist einhundert oder mehr Trays aufnehmenden Mikrowellenöfen sind für diesen Zweck mit oft Hunderten von Mikrowollengeneratoren In Form von Magnetrons ausgestattet.

Die hierfür verwendeten Mikrowellonöfen sind Autoklaven, in denen der Druck so weit erhöht werden kann, daß in den zu erhitzenden Lebensmitteln enthaltenes Wasser auch bei Temperaturen von 125° C und eventuell mehr nicht zum Kochen kommt und ein Platzen der Trayversiegelung, meist einer Kunststoffolie, vermieden wird. Es ist erforderlich, die auf einem Tray befindlichen Produkte möglichst gleichmäßig und gleichförmig zu erhitzen, um überhltzungen und Verbrennungen (hot spots) an einzelnen Stellen vorzugsweise im Randbereich und andererseits nicht oder zu wenig erhitzte Stellen (cold spots) im Mittenbereich zu vermeiden, obwohl die einzelnen Produkte unterschiedliche Energieaufnahme und unterschiedliche Erwärmungscharakteristfken haben. So dringen Mikrowellen in verschiedene Produkte verschieden tief ein. Während sie in Stärkeprodukte wie Kartoffeln und Nudetgerlchte hohe Eindringtiefen aufweisen und diese daher schneller gleichmäßig erwärmen, sind die Eindringtiefen In Fleisch erheblich geringer.

Die Einkopplung der Mikrowellenenergie ist bei bekannten Mikrowellenöfen nicht gut gelöst. Leiten die die Mikrowellen in den Autoklaven fördernden Hohllelter die Mikrowellenenergie von unten In den Autoklaven, sind sie so konzipiert und angeordnet, daß die Mikrowellen den Innenraum des Autoklaven diffus ausfüllen, mit dem Ziel, dadurch eine gleichmäßige Erwärmung des zu erhitzenden Gutes zu erreichen. Dieses Ziel ist in der Praxis nicht erreicht worden. Daher hat man die die Mikrowellenenergie in den Autoklaven leitenden Hohlleiter von oben bis dicht über die zu erwärmenden Produkte geführt und dort dicht über der Oberfläche der zu erhitzenden Produkte ausgekoppelt, mit dem Erfolg, daß man die Oberfläche und den Kopfraum der versiegelten Trays stark erwärmte und die zu erhitzenden Produkte hier zum Kochen oder gar zum Anbrennen und auch zum Platzen der Trayversiegelung brachte, aber infolge geringer Eindringtiefe die mittleren und unteren Partien nicht genügend erwärmte. Das ist auch der Fall, wenn sowohl unter als auch über den zu erwärmenden Produkten Mikrowellenenergie ausgekoppelt wurde.

Außerdem hat sich herausgestellt, daß bei der diffusen Ausfüllung des Innenraumes eines Mikrowellenofens Auslöschungen der eingekoppelten Energie durch Interferrenzen auftraten, so daß immer wieder die sogenannten cold spots auftraten, in denen die zu erhitzenden Produkte nicht sterilisiert und pasteurisiert wurden und daher eine Gefahr für die menschliche Gesundheit bildeten.

Vorrichtungen zur Erhitzung von in Trays eingesiegelten Fertiggerichten mit Mikrowellen sind aus den Druckschriften EP-A-0 269 073, US-A 4 839 485 und EP-A-0 347 623 bekannt geworden.

Bei der EP-A-0 269 073, die grundsätzlich eine Mikrowellenbestrahlung von oben und von unten vornimmt und damit die Räume im Autoklaven über und unter einer Vielzahl von Trays diffus erfüllt, muß die aus dem Hohlleiter unter dem Förderband austretende Mikrowellenenergie sowohl den Obertrum als auch den Untertrum des Förderbandes durchdringen, bevor sie den zu erhitzenden Tray erreicht, Dabei ist eine unmittelbare Einkopplung der Mikrowellenenergie in die im Tray liegenden Speisen nicht oder nur zum Teil möglich, ein großer Teil dieser Energie wird im Autoklaven gestreut. Eine individuelle Bestrahlung der einzelnen auf dem Tray liegenden Speisen ist hier nicht vorgesehen und auch nicht möglich.

Auch bei der US-A-4 839 485, die ebenfalls grundsätzlich eine Mikrowellenbestrahlung von oben und von unten vornimmt, wird wegen des weiten Abstandes der Holleiteraustrittsöffnungen zumindest ein Teil dieser Energie in den Autoklaven gestreut. Auch hier ist eine individuelle Bestrahlung der einzelnen auf dem Tray liegenden Speisen nicht vorgesehen und auch nicht möglich.

Bei der EP-A-0 347 623 wird zwar Mikrowellenenergie von der Seite her unter den Obertrum des Förderbande geleitet, die erkennbaren Austrittsöffnungen .der Hohlleiter sind jedoch nicht auf die Trays und schon garnicht auf ein bestimmtes Trayfach gerichtet, sondern nur zur Erfüllung des Raumes unter dem Obertrum des Förderbandes mit Mikrowellenenergie bestimmt.

Die Erfindung vermeldet die Nachtelle des Standes der Technik. Es Ist die Aufgabe der Erfindung, eine sachgerechte gleichmäßige Erwärmung der unterschiedlichen Produkte auf jedem Tray zu erzielen und das unerwünschte Zerplatten der Trayversiegelung ebenso wie überhitzungen zu vermeiden.

Die Erfindung besteht darin, daß man eine mikrowellendurchlässige Fördervorrichtung verwendet, daß man die Hohlleiter allein von der Seite des Autoklaven unter die die Trays tragende Fördervorrichtung führt und die Trays allein von unten mit Mikrowellen bestrahlt, daß man die Mikrowellen über nach oben auf die Unterseite der Trays gerichtete Schlitze aus den Hohlleitern auskoppelt, daß man die Auskoppelöffnungen in den Hohlleitern dicht unter dem zu erhitzenden Tray mit einem Abstand von weniger als der halben Wellenlänge anordnet und daß man die Trays während der Mikrowellenbehandlung über den Auskopplungsöffnungen der Hohlleiter hin- und her bewegt, wobei jeder Tray über mindestens ein versetztes Paar von Auskoppfungsöffnungen bewegt wird.

Dazu benutzt man eine Vorrichtung, die sich durch eine mikrowellendurchlässige Fördervorrichtung , durch allein von der Seite des Autoklaven unter die die Trays tragende Fördervorrichtung geführte Hohlleiter, durch auf die Trays und die diese tragende Fördervorrichtung gerichtete Auskopplungsöffnungen für die Mikrowellen in der Oberfläche der Hohlleiter, wobei die Auskoppelöffnungen in den Hohlleitern dicht unter dem zu erhitzenden Tray mit einem Abstand von weniger als der halben Wellenlänge angeordnet sind und durch eine die Trays während der Mikrowellenbehandlung über den Auskopplungsöffnungen der Hohlleiter hin- und her bewegende Transportvorrichtung, wobei jedem Tray mindestens ein Paar von Mikrowellengeneratoren zugeordnet ist, deren Hohlleiter unterschiedlich lang sind und deren Auskoppelschlitze gegeneinander versetzt angeordnet sind und wobei jeder Tray während der Mikrowellenbehandlung über mehr als ein versetztes Paar von Auskopplungsöffnungen bewegt ist, auszeichnet.

Hierdurch wird erreicht, daß die auf dem Tray gelagerten Speisen zunächst von unten erwärmt werden und daß die Wärme von unten nach oben aufsteigt. Dadurch werden überhitzungen und Verbrennungen an der Oberfläche vermieden, auch das unerwünschte Kochen an einigen Stellen der zu erhitzenden Produkte unterbleibt. Denn wenn an einzelnen Stellen das Wasser in den Speisen so weit erhitzt wird, daß sich Dampf bildet, so muß dieser durch die kälteren oberen Schichten hindurchtreten und verliert dabei unter Wärmeabgabe an diese oberen Schichten seine eigene Wärme.

Zweckmäßigerweise wird bei einer Frequenz von 2,45 Gigahertz gearbeitet. Der Abstand der Auskoppelöffnungen von der Unterseite des Trays beträgt vorzugsweise ein Drittel der Wellenlänge.

Hierbei ist es zweckmäßig, wenn man die Mikrowellengeneratoren im Impulsbetrieb arbeiten läßt (tastet), indem man den Anodenstrom in diesem Generator fließen läßt, wenn ein Trayfach über dem Auskoppelschlitz befindlich ist, und den Anodenstrom abschaltet, wenn der Tray den Raum über dem Tray während der Bewegung des Fördermittels verläßt.

Weiter ist es zweckmäßig, wenn man den Anodenstrom je nach der Stellung des Trays über dem Auskoppelschlitz in unterschiedlicher Stärke fließen läßt, vorzugsweise mit der größten Stärke, wenn das zu bestrahlende Trayfach mittig über dem Auskoppelschlitz befindlich ist.

Da, wie oben erläutert, die Eindringtiefe der Mikrowellen und die Energieaufnahme der unterschiedlichen Speisen auf einem Tray unterschiedlich sind, ist es zweckmäßig, wenn man jeden Tray mit mindestens zwei Magnetrons behandelt, deren Hohlleiter unterschiedlich lang sind und deren Auskoppelschlitze gegeneinander versetzt angeordnet sind, damit die Auskopplung der Mikrowellenenergie in der für die Erwärmung der jeweiligen Speise erforderlichen Energiemenge jeweils dicht unter der zu erwärmenden Speise erfolgt.

Da im Inneren des Autoklaven mit überdruck gearbeitet wird, ist es wichtig, daß die Hohlleiter über Druckfenster mit dem Magnetron verbunden sind, das mit Atmosphärendruck arbeiten sollte.

Um eine gleichmäßige Erwärmung der Speisen zu erreichen stehen die Trays auf einer Fördervorrichtung, vorzugsweise auf einem Förderband, die die Trays während der Erhitzungsbehandlung hin- und her bewegt, so daß die Trays über mehrere Hohlleiter hinweglaufen und jeder Tray über mehr als ein versetztes Paar von Auskopplungsöffnungen bewegt wird.

In solchen Fällen ist es vorteilhaft, daß man die Mikrowellen über Schlitze oder Lochreihen in den Hohlleitern auskoppelt.

Um die Anlage verschiedenen Trayformen und unterschiedlichen geometrischen Gegebenheiten anpassen zu können, ist es zweckmäßig, wenn die Lage der Auskopplungsöffnung durch zwischen zwei Hohlleiterstücke gesetzte weitere Hohlleiterstücke veränderbar ist.

Um die Anlage den unterschiedlichen Arbeitsbedingungen beim Sterilisieren und beim Pasteurisieren anpassen zu können, ist es zweckmäßig, wenn man für eine Pasteurisierung den versiegelten Tray im Autoklaven mit geringem überdruck und für die Sterisilation mit einem höheren überdruck beaufschlagt.

Um die Anlage verschiedensten Anforderungen an die Erhitzung und Erwärmung unterschiedlichster Speisen anpassen zu können, ist es zweckmäßig, daß man die Zuführung der Mikrowellenenergie gemäß einem vorgegebenem Programm steuert und hierzu eine Anlage zur computerunterstützten Prozeßsteuerung einsetzt, die aufgrund eines vorgebbaren Programms und während der Mikrowellenbehandlung vorgenommener Messungen den Erwärmungsbetrieb führt.

Dabei ist es zweckmäßig, daß man für die Steuerung einen Zentralrechner einsetzt, der die einzelnen Mikrowellengeneratoren über einen Datenbus steuert

Hierbei ist es zur Messung der von den einzelnen Mikrowellengeneratoren abgegebenen Energie zweckmäßig, daß man über die Messung des zeitlichen Verlaufes des Anodenstroms (zeitliches integral des Anodenstromes) die abgegebene Mikrowellenenergie bestimmt und einem Prozeßrechner zur weiteren Verrechnung zuführt.

Um überhitzungen an den Oberflächen der Speisen zu vermeiden, ist es zweckmäßig, daß die Umgebungsatmosphere der zu erhitzenden Speisen im Inneren des Mikrowellenofens thermostatisch so eingeregelt wird, daß sie höher als die Anfangstemperatur der Speisen vor der Mikrowellenbehandlung, aber niedriger als die zu erzielende Endtemperatur der Speisen ist.

Das Wesen der Erfindung ist nachstehend anhand eines in der Zeichnung schematisch dargestellten Ausführungsbsispisls näher erläutert. Es zeigen:

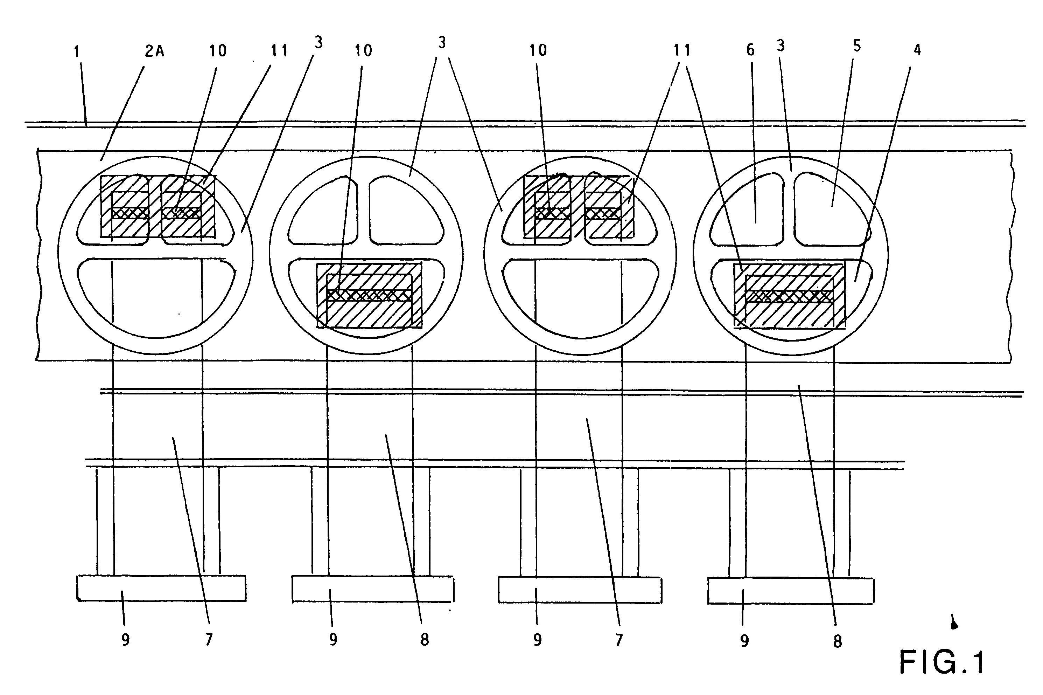

- Fig.1: einen Ausschnitt aus einem Horizontalschnitt durch den Autoklaven,

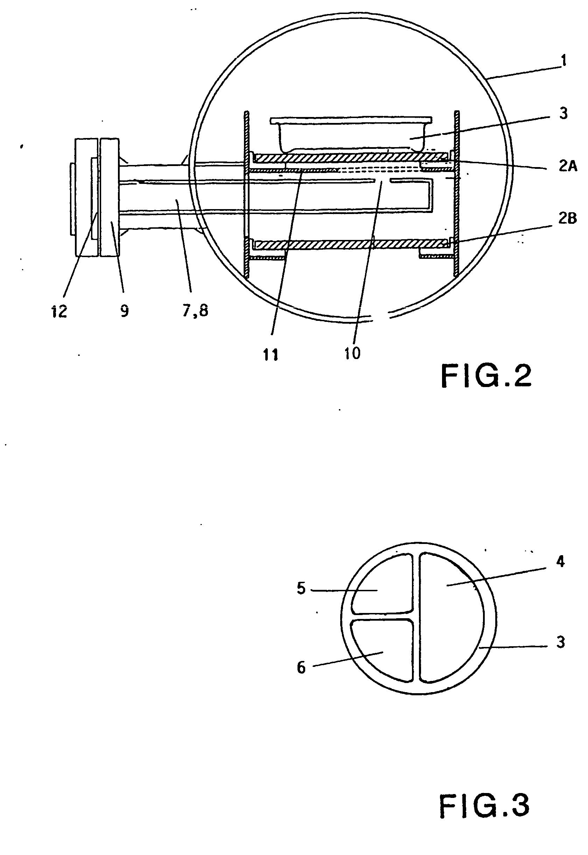

- Fig.2: einen Vertikalschnitt durch den Autoklaven,
- Fig.3: eine Ansicht eines Trays von oben,
- Fig.4: eine Seitenansicht des Trays,
- Fig.5: ein Zeit-Leistungsdiagramm der Mikrowellenbestrahlung.

In dem rohrförmigen Autoklaven 1 befindet sich ein Förderband 2 mit dem Obertrum 2A und dem Untertrum 2B. Auf dem Obertrum 2A stehen Trays 3 mit zu erwärmenden Nahrungsmittelportionen in den Fächeren 4,5,6 des Trays 3. So können in dem Fach 4 Fleisch und Soße befindlich sein, im Fach 5 Kartoffeln oder Nudeln und im Fach 6 Gemüse.

Von der Seite her ragen in den Autoklaven 1 Hohlleiter 7,8, an deren Flansche 9 nicht dargestellte Mikrowellengeneratoren angekoppelt sind.Die Hohlleiter 7 weisen eine größere Länge als die Hohlleiter 8 auf. Beide Arten von Hohlleitern weisen an ihrem Ende Schlitze 10 auf, aus denen die Mikrowellen ausgekoppelt werden. Dabei können die Schlitze 10 in den langen Hohlleitern 7 zur Erwärmung der Trayfächer 4 mit Fleisch und Soße dienen, während die Schlitze 10 in den kürzeren Hohlleitern 8 der Erwärmung der Fächer 5 und 6 mit Nudeln, Kartoffeln und Gemüse der Trays 3 dienen.

Die Schlitze 10 sind nach oben gerichtet und dicht unter den Trays 3 mit den zu erwärmenden Lebensmittelportionen angeordnet. Zwischen den Schlitzen 10 und den Trays 3 können sich noch Blenden 11 befinden, welche zur Bündelung der Abstrahlung in die Trayfächer 4,5,6 dienen.

Die Hohlleiter (7,8) sind über Druckfenster (12) mit den Mikrowellengeneratoren verbunden.

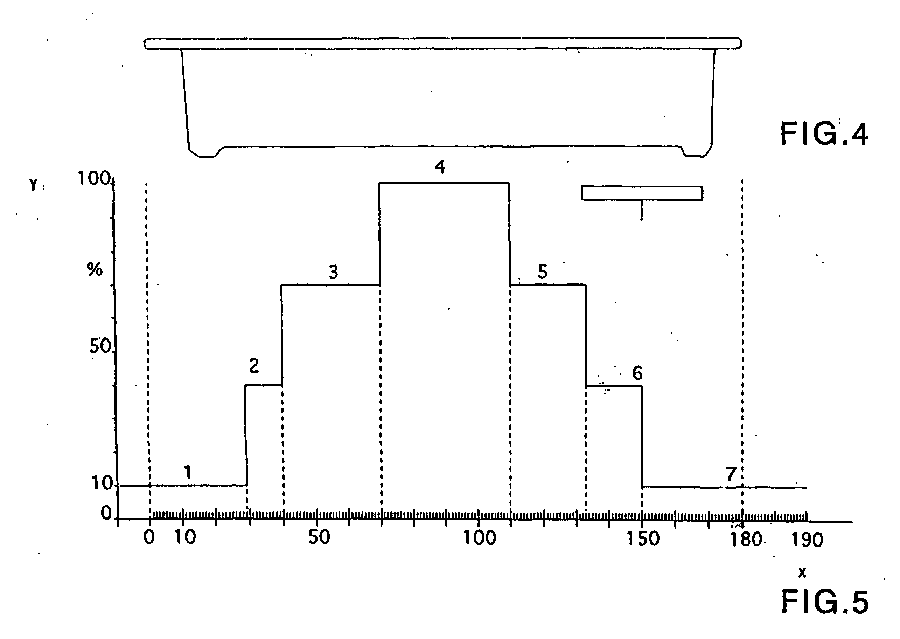

In Fig.5 ist als Diagramm ein Mikrowellenleistungsprofil aufgezeichnet. Die Koordinate X bezeichnet die Weglänge der vom Tray durchfahrenen Strecke, die Koordinate Y die zugeführte Energie. Man sieht in Zusammenhang mit dem Tray der Fig.4, daß am meisten Energie zugeführt wird, wenn die Mitte des Trays über dem Auskoppelschlitz befindlich ist und daß weniger Energie den seitlichen Teilen des Trays zugeführt wird, wenn diese über dem Auskoppelschlitz befindlich sind.

### Liste der Bezugszeichen

- 1: Autoklav
- 2: Förderband
- 2A: Obertrum
- 2B: Untertrum
- 3: Tray
- 4: Trayfach
- 5: Trayfach
- 6: Trayfach
- 7: Hohlleiter
- 8: Hohlleiter
- 9: Flansch
- 10: Schlitz
- 11: Blende
- 12: Druckfenster

## Patentansprüche

1. Verfahren zur Erhitzung von in Trays eingesiegelten Fertiggerichten mit Mikrowellen,
bei dem die Trays in einen Autoklaven eingestellt werden, in den Mikrowellen aus Hohlleitern eingekoppelt werden, und bei dem die Trays in und/oder durch den Autoklaven bewegt werden,
**dadurch gekennzeichnet,**
**daß** man eine mikrowellendurchlässige Fördervorrichtung (2A) verwendet,
**daß** man die Hohlleiter (7,8) allein von der Seite des Autoklaven (1) unter die die Trays (3) tragende Fördervorrichtung (2A) führt und die Trays (3) allein von unten mit Mikrowellen bestrahlt,
**daß** man die Mikrowellen über nach oben auf die Unterseite der Trays (3) gerichtete Schlitze (10) aus den Hohlleitern auskoppelt,
**daß** man die Auskoppelöffnungen (10) in den Hohlleitern dicht unter dem zu erhitzenden Tray (3) mit einem Abstand von weniger als der halben Wellenlänge anordnet und daß man die Trays (3) während der Mikrowellenbehandlung über den Auskopplungsöffnungen (10) der Hohlleiter (7,8) hin- und her bewegt,
wobei jeder Tray (3) über mindestens ein versetztes Paar von Auskopplungsöffnungen (10) bewegt wird.

2. Verfahren nach Anspruch 1,
**dadurch gekennzeichnet,**
**daß** man die Trays (3) exakt zu den Auskoppelöffnungen (10) der Hohlleiter (7,8) positioniert und dann entsprechend einem vorgegebenem Programm um exakt vorgegebene Wege hin- und herbewegt,
**daß** man die Mikrowellen in mehreren Impulsen bestimmter und nicht immer gleicher zeitlicher Länge und Intensität aus den Auskoppelöffnungen (10) austreten läßt, wenn sich die Trays (3) während ihrer Hin- und Herbewegung über den Auskoppelöffnungen (10) befinden,
wobei mittlere Bereiche der Trayfächer (4,5,6) mit mehr Mikrowellenenergie als Randbereiche beaufschlagt werden.

3. Verfahren nach Anspruch 1 und 2,
**dadurch gekennzeichnet,**
**daß** man den Anodenstrom im Mikrowellengenerator je nach der Stellung des Trays (3) über dem Auskoppelschlitz (10) in unterschiedlicher Stärke fließen läßt, vorzugsweise mit der größten Stärke, wenn das zu bestrahlende Trayfach (4,5,6) mittig über dem Auskoppelschlitz befindlich ist.

4. Verfahren nach Anspruch 1,
**dadurch gekennzeichnet,**
**daß** man jeden Tray (3) während seiner Mikrowellenbehandlung der Strahlung zweier Mikrowellengeneratoren aussetzt, deren Hohlleiter (7,8) unterschiedlich lang sind und deren Auskoppelschlitze (10) gegeneinander versetzt derart angeordnet sind, daß sie während der Mikrowellenabstrahlung unter verschiedenen Fächern des Trays befindlich sind.

5. Verfahren nach Anspruch 1,
**dadurch gekennzeichnet,**
**daß** die Hohlleiter (7,8) über Druckfenster (12) mit dem Magnetron verbunden sind.

6. Verfahren nach Anspruch 1,
**dadurch gekennzeichnet,**
**daß** die Lage der Auskopplungsöffnung (10) durch zwischen zwei Hohlleiterstücke gesetzte weitere Hohlleiter- oder Distanzstücke oder teleskopierbare Hohlleiter veränderbar ist.

7. Verfahren nach Anspruch 1,
**dadurch gekennzeichnet,**
**daß** man im Autoklaven (1) einen der Temperaturentwikklung in den Trays (3) angepaßten überdruck einstellt und geregelt entsprechend der Temperatur im Prozeßverlauf führt,
wobei man für eine Pasteurisierung den versiegelten Tray (3) im Autoklaven (1) mit geringem überdruck und für die Sterisilation mit einem höheren überdruck beaufschlagt.

8. Verfahren nach Anspruch 1,
**dadurch gekennzeichnet,**
**daß** man die Zuführung der Mikrowellenenergie in die Trays (3) gemäß einem vorgegebenem lageabhängigen Echtzeitprogramm steuert.

9. Verfahren nach Anspruch 1,
**dadurch gekennzeichnet,**
**daß** man für die Steuerung einen Zentralrechner einsetzt, der die einzelnen Mikrowellengeneratoren über einen Datenbus steuert

10. Verfahren nach Anspruch 1,
**dadurch gekennzeichnet,**
**daß** man über die Messung des zeitlichen Verlaufes des Anodenstroms (zeitliches Integral des Anodenstromes) die abgegebene Mikrowellenenergie bestimmt und einem Prozeßrechner zur weiteren Verrechnung für die Prozeßsteuerung zuführt.

11. Verfahren nach Anspruch 1,
**dadurch gekennzeichnet,**
**daß** die Umgebungsatmosphäre der zu erhitzenden Speisen im Inneren des Mikrowellenofens thermostatisch so eingeregelt wird, daß sie höher als die Anfangstemperatur der Speisen vor der Mikrowellenbehandlung, aber niedriger als die zu erzielende Endtemperatur der Speisen ist.

12. Vorrichtung zur Erhitzung von in Trays (3) eingesiegelten Fertiggerichten mit Mikrowellen,
bestehend aus einem unter Überdruck stellbaren Autoklaven (1), einer sich in diesem bewegenden Transportvorrichtung (2) für die Trays (3) und in den Autoklaven (1) führenden Hohlleitern (7,8), die von Mikrowellengenemtoren gespeist sind,
**gekennzeichnet durch**
eine mikrowellendurchlässige Fördervorrichtung (2A), **durch** allein von der Seite des Autoklaven (1) unter die die Trays (3) tragende Fördervorrichtung (2A) geführte Hohlleiter (7,8),
**durch** auf die Trays (3) und die diese tragende Fördervorrichtung (2A) gerichtete Auskopplungsöffnungen (10) für die Mikrowellen in der Oberfläche der Hohlleiter (7,8),
wobei die Auskoppelöffnungen (10) in den hohlleitern (7,8) dicht unter dem zu erhitzenden Tray (3) mit einem Abstand von weniger als der halben Wellenlänge angeordnet sind
und **durch** eine die Trays (3) während der Mikrowellenbehandlung über den Auskopplungsöffnungen (10) der Hohlleiter (7,8) hin- und her bewegende Transportvorrichtung (2),
wobei jedem Tray (3) mindestens ein Paar von Mikrowellengeneratoren zugeordnet ist, deren Hohlleiter (7,8) unterschiedlich lang sind und deren Auskoppelschlitze (10) gegeneinander versetzt angeordnet sind
und wobei jeder Tray (3) während der Mikrowellenbehandlung über mehr als ein versetztes Paar von Auskopplungsöffnungen (10) bewegt ist.

13. Vorrichtung nach Anspruch 12,
**dadurch gekennzeichnet,**
**daß** Arbeitsmittel für die exakte Positionierung der Trays (3) zu den Auskoppelöffnungen (10) der Hohlleiter (7,8) vorgesehen sind,
**daß** Arbeitsmittel für eine exakte Hin- und Herbewegung der Fördervorrichtung vorgesehen sind, die entsprechend einem vorgegebenem Programm die Trays (3) exakt um vorgegebene Wege hin- und herbewegt,
**daß** eine Stefflnxigsvorjichtung- vorgesehen ist, die die Mikrowellen in mehreren Impulsen bestimmter und nicht immer gleicher zeitlicher Länge und Intensität aus den Auskoppelöffnungen (10) austreten läßt, wenn sich die Trays (3) während ihrer Hin- und Herbewegung über den Auskoppelöffnungen (10) befinden,
wobei mittlere Bereiche der Trayfächer (4,5,6) mit mehr Mikrowellenenergie als Randbereiche beaufschlagt werden.

14. Vorrichtung nach Anspruch 12,
**dadurch gekennzeichnet,**
**daß** die die Mikrowellen erzeugenden Mikrowellengeneratoren allein seitlich des Autoklaven (1) angebracht sind und mit jeweils einem an einer Seite des Autoklaven (1) in diesen eingeführten Hohlleiter (7,8) verbunden sind, der mindestens eine Auskoppelöffnung (10) für die Mikrowellen dicht in einem Abstand von weniger als einer halben Wellenlänge unter dem zu erhitzenden Tray (3) aufweist.

15. Vorrichtung nach Anspruch 12,
**dadurch gekennzeichnet,**
**daß** die Hohlleiter (7,8) über Druckfenster (12) mit den Mikrowellengeneratoren verbunden sind.

16. Vorrichtung nach Anspruch 12,
**dadurch gekennzeichnet,**
**daß** die Lage der Auskopplungsöffnungen (10) gegenüber der Transportvorrichtung (2) und den Trays (3) durch zwischen zwei Hohlleiterstücke gesetzte weitere Hohlleiterstücke veränderbar ist.

17. Vorrichtung nach Anspruch 12,
**dadurch gekennzeichnet,**
**daß** die Zuführung der Mikrowellenenergie gemäß einem vorgegebenem Echtzeit-Programm gesteuert ist.

18. Vorrichtung nach Anspruch 12,
**dadurch gekennzeichnet,**
**daß** für die Steuerung ein Zentralrechner eingesetzt ist, der die einzelnen Mikrowellengeneratoren über mindestens einen Datenbus steuert

19. Vorrichtung nach Anspruch 12,
**dadurch gekennzeichnet,**
**daß** ein Prozeßrechner in der Anlage zur Erhitzung der Trays vorgesehen ist, der über die Messung des zeitlichen Verlaufes des Anodenstroms (zeitliches Integral des Anodenstromes) die abgegebene Mikrowellenenergie errechnet und die den einzelnen Mikrowellengeneratoren zuzuführenden Anodenströme nach einem vorgegebenen Programm bestimmt.

20. Vorrichtung nach Anspruch 19,
**dadurch gekennzeichnet,**
**daß** die Mikrowellengeneratoren im Takt- oder Impulsbetrieb arbeiten, indem der Anodenstrom in diesem Generator (1) eingeschaltet ist, wenn ein Trayfach über dem Auskoppelschlitz (10) befindlich ist, und der Anodenstrom abgeschaltet ist, wenn der Tray (3) den Raum über dem Auskoppelschlitz während der Bewegung des Fördermittels verläßt.

21. Vorrichtung nach Anspruch 19,
**dadurch gekennzeichnet,**
**daß** der Anodenstrom je nach der Stellung des Trays (3) über dem Auskoppeischlitz (10) in unterschiedlicher Stärke fließt, vorzugsweise mit der größten Stärke, wenn das zu bestrahlende Trayfach(4,5,6) mittig über dem Auskoppelschlitz (10) befindlich ist.

22. Vorrichtung nach Anspruch 12,
**dadurch gekennzeichnet,**
**daß** der Abstand der Trays (3) voneinander auf der Fördervorrichtung exakt dem Abstand der Hohlleiterpaare (7,8) voneinander entspricht.

23. Vorrichtung nach Anspruch 12,
**dadurch gekennzeichnet,**
**daß** der Abstand der Trays (3) voneinander auf der Fördervorrichtung gleich ist.

24. Vorrichtung nach Anspruch 12,
**dadurch gekennzeichnet,**
**daß** die Trays (3) auf der Fördervorrichtung sämtlich in gleicher Winkelstellung positioniert sind.

## Claims

1. Method for heating ready meals, which are sealed in trays, with microwaves, in which the trays are placed in an autoclave, into which microwaves are introduced from waveguides, and in which the trays are moved in and/or through the autoclave, **characterised in that** a microwave-permeable conveying device (2A) is used, **in that** the waveguides (7, 8) are guided only from the side of the autoclave (1) under the conveying device (2A) carrying the trays (3) and the trays are irradiated only from below with microwaves, **in that** the microwaves are output from the waveguides via slots (10) directed upwardly onto the lower side of the trays (3), **in that** the output apertures (10) are arranged in the waveguides closely below the tray (3) to be heated at a distance of less than half the wavelength and **in that** the trays (3) are moved back and forth during the microwave treatment over the output apertures (10) of the waveguides (7, 8), wherein each tray (3) is moved over at least one offset pair of output apertures (10).

2. Method according to claim 1, **characterised in that** the trays (3) are positioned precisely with respect to the output apertures (10) of the waveguides (7, 8) and then moved back and forth according to a predetermined programme by exactly predetermined paths, **in that** the microwaves are allowed to leave the output apertures (10) in a plurality of pulses of specific, and not always the same, temporal length and intensity, when the trays (3) are located over the output apertures (10) during their back and forth movement, wherein medium ranges of the tray compartments (4, 5, 6) are subjected to more microwave energy than edge regions.

3. Method according to claim 1 and 2, **characterised in that** the anode current in the microwave generator is allowed to flow with a different intensity over the output slot (10) depending on the position of the tray (3), preferably with the greatest intensity when the tray compartment (4, 5, 6) to be irradiated is located centrally over the output slot.

4. Method according to claim 1, **characterised in that** during its microwave treatment, each tray (3) is subjected to the radiation of two microwave generators, the waveguides (7, 8) of which have different lengths and the output slots (10) of which are arranged offset with respect to one another in such a way that they are located under various compartments of the tray during the microwave radiation.

5. Method according to claim 1, **characterised in that** the waveguides (7, 8) are connected via pressure windows (12) to the magnetron.

6. Method according to claim 1, **characterised in that** the position of the output aperture (10) can be changed by further waveguides or spacers or telescoping waveguides placed between two waveguide pieces.

7. Method according to claim 1, **characterised in that**, in the autoclave (1), an excess pressure adapted to the temperature development in the trays (3) is set and regulated according to the temperature in the process course, the sealed tray (3) in autoclave (1) being subjected to slight excess pressure for pasteurisation and to a higher excess pressure for sterilisation.

8. Method according to claim 1, **characterised in that** the supply of the microwave energy into the trays (3) is controlled according to a predetermined position-dependent real time programme.

9. Method according to claim 1, **characterised in that** a central computer is used for the control and controls the individual microwave generators via a databus.

10. Method according to claim 1, **characterised in that** the microwave energy emitted is determined by measuring the temporal course of the anode current (time integral of the anode current) and is supplied to a process computer for further calculation for the process control.

11. Method according to claim 1, **characterised in that** the ambient atmosphere of the foodstuffs to be heated in the interior of the microwave oven is adjusted thermostatically in such a way that it is higher than the initial temperature of the foodstuff prior to the microwave treatment but lower than the end temperature of the foodstuffs to be achieved.

12. Device for heating ready meals sealed in trays (3), with microwaves, consisting of an autoclave (1) which can be placed under excess pressure, a transporting device (2), which can be moved therein, for the trays (3) and waveguides (7, 8), which lead into the autoclave (1) and are fed by microwave generators, **characterised by** a microwave-permeable conveying device (2A), by waveguides (7, 8) guided only from the side of the autoclave (1) under the conveying device (2A) carrying the trays (3), by output apertures (10) for the microwaves directed onto the trays (3) and the conveying device (2A) carrying them, in the surface of the waveguides (7, 8), the output apertures (10) in the waveguides (7, 8) being arranged closely below the tray (3) to be heated at a distance of less than half the wavelength and by a transporting device (2) moving the trays (3) back and forth during the microwave treatment over the output apertures (10) of the waveguides (7, 8), each tray (3) being allocated at least a pair of microwave generators, the waveguides (7, 8) of which having different lengths and their output slots (10) being arranged offset with respect to one another and wherein each tray (3) is moved over more than one offset pair of output apertures (10) during the microwave treatment.

13. Device according to claim 12, **characterised in that** operating means for the exact positioning of the trays (3) with respect to the output apertures (10) of the waveguides (7, 8) are provided, **in that** operating means are provided for an exact back and forth movement of the conveying device which moves the trays (3) back and forth exactly by predetermined paths according to a predetermined programme, **in that** a control device is provided which allows the microwaves to leave from the output apertures (10) in a plurality of pulses of specific, and not always the same, temporal length and intensity, when the trays (3) are located above the output apertures (10) during their back and forth movement, wherein central regions of the tray compartments (4, 5, 6) are subjected to more microwave energy than edge regions.

14. Device according to claim 12, **characterised in that** the microwave generators generating the microwaves are only provided to the side of the autoclave (1) and are connected in each case to one waveguide (7, 8), which is on one side of the autoclave (1) and introduced therein, which waveguide has at least one output aperture (10) for the microwaves closely below the tray (3) to be heated at a spacing of less than half a wavelength.

15. Device according to claim 12, **characterised in that** the waveguides (7, 8) are connected to the microwave generators via pressure windows (12).

16. Device according to claim 12, **characterised in that** the position of the output apertures (10) can be changed relative to the transporting device (2) and the trays (3) by further waveguide pieces placed between two waveguide pieces.

17. Device according to claim 12, **characterised in that** the supply of the microwave energy is controlled according to a predetermined real time programme.

18. Device according to claim 12, **characterised in that** a central computer is used for the control and controls the individual microwave generators via at least one databus.

19. Device according to claim 12, **characterised in that** a process computer is provided in the system for heating the trays and calculates the microwave energy emitted via the measurement of the temporal course of the anode current (time integral of the anode current) and determines the anode currents to be supplied to the individual microwave generators according to a predetermined programme.

20. Device according to claim 19, **characterised in that** the microwave generators operate in clock or pulse operation, **in that** the anode current in this generator (1) is switched on when a tray compartment is located above the output slot (10), and the anode current is switched off when the tray (3) leaves the chamber over the output slot during the movement of the conveying means.

21. Device according to claim 19, **characterised in that** the anode current flows in a different intensity according to the position of the tray (3) above the output slot (10), preferably with the greatest intensity when the tray compartment (4, 5, 6) to be irradiated is located centrally above the output slot (10).

22. Device according to claim 12, **characterised in that** the distance of the trays (3) from one another on the conveying device corresponds precisely to the distance of the waveguide pairs (7, 8) from one another.

23. Device according to claim 12, **characterised in that** the distance of the trays (3) from one another on the conveying device is the same.

24. Device according to claim 12, **characterised in that** the trays (3) on the conveying device are all positioned in the same angular position.

## Revendications

1. Procédé pour le chauffage à micro-ondes de repas prêts à la consommation renfermés dans des conteneurs, dans lequel les conteneurs sont ajustés dans un autoclave dans lequel sont couplées des micro-ondes provenant de guides d'ondes et dans lequel les conteneurs sont déplacés dans et/ou par l'autoclave, **caractérisé en ce que** :
- on utilise un dispositif de convoyage (2A) perméable aux micro-ondes ;
- on mène les guides d'ondes (7, 8) seulement du côté de l'autoclave (1) jusque sous le dispositif de convoyage (2A) qui porte les conteneurs (3) et on expose les conteneurs aux micro-ondes (3) seulement par le bas ;
- on découple les micro-ondes des guides d'ondes par des fentes (10) dirigées vers le haut sur la face inférieure des conteneurs (3) ;
- on agence les ouvertures de découplage (10) dans les guides d'ondes juste en dessous du conteneur (3) à chauffer à une distance inférieure à la demi-longueur d'onde ; et
- on déplace les conteneurs (3) en va-et-vient pendant le traitement aux micro-ondes au-dessus des ouvertures de découplage (10) des guides d'ondes (7, 8),
dans lequel chaque conteneur (3) est déplacé au-dessus d'au moins une paire décalée d'ouvertures de découplage (10).

2. Procédé selon la revendication 1, **caractérisé en que** :
- on positionne les conteneurs (3) exactement par rapport aux ouvertures de découplage (10) des guides d'ondes (7, 8) et on les déplace ensuite en va-et-vient exactement selon des trajets prescrits en fonction d'un programme prescrit ; et
- on fait sortir les micro-ondes des ouvertures de découplage (10) en plusieurs impulsions d'une longueur et d'une intensité déterminées et temporelles non toujours identiques lorsque les conteneurs (3) se trouvent au-dessus des ouvertures de découplage (10) pendant leur mouvement de va-et-vient,
dans lequel des zones centrales des compartiments (4, 5, 6) du conteneur reçoivent davantage d'énergie de micro-ondes que les zones en bordure.

3. Procédé selon la revendication 1 et 2, **caractérisé en qu'**on fait circuler le courant d'anode avec une intensité différente dans le générateur de micro-ondes selon la position du conteneur (3) au-dessus de la fente de découplage (10), de préférence avec l'intensité maximale lorsque le compartiment (4, 5, 6) du conteneur, devant être exposé, se trouve au milieu de la fente de découplage (10).

4. Procédé selon la revendication 1, **caractérisé en qu'**on expose chaque conteneur (3) pendant son traitement aux micro-ondes au rayonnement de deux générateurs de micro-ondes dont les guides d'ondes (7, 8) sont d'une longueur différente et dont les fentes de découplage (10) sont agencées avec décalage à l'encontre l'une de l'autre de manière à se trouver sous différents compartiments du conteneur pendant le rayonnement des micro-ondes.

5. Procédé selon la revendication 1, **caractérisé en que** les guides d'ondes (7, 8) sont reliés au magnétron via des fenêtres de pression (12).

6. Procédé selon la revendication 1, **caractérisé en que** la position de l'ouverture de découplage (10) peut être modifiée par d'autres éléments de guides d'ondes ou écarteurs placés entre deux éléments de guides d'onde ou par des guides d'onde pouvant être télescopés.

7. Procédé selon la revendication 1, **caractérisé en qu'**on ajuste dans l'autoclave (1) une surpression adaptée à l'évolution de la température dans les conteneurs (3) et en ce qu'on la mène de manière régulée dans le déroulement du processus en fonction de la température, dans lequel on soumet dans l'autoclave (1) le conteneur scellé (3) à une faible surpression pour une pasteurisation et à une surpression plus élevée pour la stérilisation.

8. Procédé selon la revendication 1, **caractérisé en qu'**on commande l'apport de l'énergie des micro-ondes dans les conteneurs (3) conformément à un programme de temps réel prescrit qui dépend de la position.

9. Procédé selon la revendication 1, **caractérisé en qu'**on utilise pour la commande un ordinateur central qui commande les générateurs de micro-ondes individuels via un bus de données.

10. Procédé selon la revendication 1, **caractérisé en qu'**on détermine l'énergie des micro-ondes fournie par la mesure de la valeur du courant d'anode en fonction du temps (intégrale temporelle du courant d'anode) et en ce qu'on l'amène à un ordinateur industriel pour des calculs supplémentaires pour la commande du processus.

11. Procédé selon la revendication 1, **caractérisé en que** l'atmosphère environnante des repas devant être chauffés est régulée de manière thermostatique à l'intérieur du four à micro-ondes de manière à être plus élevée que la température de départ des repas avant le traitement aux micro-ondes, mais à être plus basse que la température finale des mets devant être obtenue.

12. Dispositif pour le chauffage à micro-ondes de repas prêts à la consommation renfermés dans des conteneurs (3), constitué d'un autoclave (1) pouvant être mis sous surpression, d'un dispositif de transport (2) se déplaçant dans celui-ci pour les conteneurs (3) et de guides d'ondes (7, 8) arrivant jusque dans l'autoclave (1) et alimentés par les générateurs de micro-ondes, **caractérisé par** :
- un dispositif de convoyage (2A) perméable aux micro-ondes ;
- des guides d'ondes (7, 8) menés seulement depuis le côté de l'autoclave (1) jusque sous le dispositif de convoyage (2A) qui porte les conteneurs (3) ; et
- des ouvertures de découplage (10) dirigées vers les conteneurs (3) et vers le dispositif de convoyage (2A) qui porte ceux-ci, pour les micro-ondes dans la surface des guides d'ondes (7, 8), les ouvertures de découplage (10) étant agencées dans les guides d'ondes (7, 8) juste en dessous du conteneur (3) à chauffer à une distance inférieure à la demi-longueur d'onde ; et
- un dispositif de transport (2) qui déplace les conteneurs (3) en va-et-vient pendant le traitement aux micro-ondes au-dessus des ouvertures de découplage (10) des guides d'ondes (7, 8),
dans lequel :
- au moins une paire de générateurs de micro-ondes dont les guides d'ondes (7, 8) ont une longueur différente et dont les fentes de découplage (10) sont agencées avec décalage à l'encontre l'une de l'autre, est associée à chaque conteneur (3) ; et
- chaque conteneur (3) est déplacé pendant le traitement aux micro-ondes au-dessus de plus d'une paire décalée d'ouvertures de découplage (10).

13. Dispositif selon la revendication 12, **caractérisé en que** :
- des moyens de travail sont prévus pour le positionnement exact des conteneurs (3) par rapport aux ouvertures de découplage (10) des guides d'ondes (7, 8) ;
- des moyens de travail sont prévus pour le déplacement exact en va-et-vient du dispositif de convoyage, lesquels déplacent en va-et-vient les conteneurs (3) exactement sur des trajets prescrits en fonction d'un programme prescrit ; et
- on a prévu un dispositif de commande qui fait sortir les micro-ondes des ouvertures de découplage (10) en plusieurs impulsions d'une longueur et d'une intensité déterminées et temporelles non toujours identiques lorsque les conteneurs (3) se trouvent au-dessus des ouvertures de découplage (10) pendant leur mouvement de va-et-vient,
dans lequel des zones centrales des compartiments (4, 5, 6) du conteneur sont exposées à davantage d'énergie de micro-ondes que les zones en bordure.

14. Dispositif selon la revendication 12, **caractérisé en que** les générateurs de micro-ondes qui génèrent les micro-ondes sont montés seulement à côté de l'autoclave (1) et sont reliés respectivement à un guide d'ondes (7, 8) qui est introduit dans l'autoclave (1) sur un côté de celui-ci et qui présente au moins une ouverture de découplage (10) pour les micro-ondes juste en dessous du conteneur (3) à chauffer à une distance inférieure à une demi-longueur d'onde.

15. Dispositif selon la revendication 12, **caractérisé en que** les guides d'ondes (7, 8) sont reliés aux générateurs de micro-ondes via des fenêtres de pression (12).

16. Dispositif selon la revendication 12, **caractérisé en que** la position des ouvertures de découplage (10) par rapport au dispositif de transport (2) et aux conteneurs (3) peut être modifiée par d'autres éléments de guides d'ondes placés entre deux éléments de guides d'onde.

17. Dispositif selon la revendication 12, **caractérisé en que** l'apport de l'énergie des micro-ondes est commandé conformément à un programme de temps réel prescrit.

18. Dispositif selon la revendication 12, **caractérisé en qu'**on utilise pour la commande un ordinateur central qui commande les générateurs de micro-ondes individuels via au moins un bus de données.

19. Dispositif selon la revendication 12, **caractérisé en qu'**on a prévu un ordinateur de processus dans l'installation pour le chauffage des conteneurs, lequel calcule l'énergie des micro-ondes fournie par la mesure de la valeur du courant d'anode en fonction du temps (intégrale temporelle du courant d'anode) et qui détermine les courants d'anode devant être amenés aux générateurs de micro-ondes individuels selon un programme prescrit.

20. Dispositif selon la revendication 19, **caractérisé en que** les générateurs de micro-ondes travaillent en mode cadencé ou par impulsions, par l'enclenchement du courant d'anode dans ce générateur (1) lorsqu'un compartiment de conteneur se trouve au-dessus de la fente de découplage (10) et par la coupure du courant d'anode lorsque le conteneur (3) quitte l'espace au-dessus de la fente de découplage pendant le mouvement du moyen de convoyage.

21. Dispositif selon la revendication 19, **caractérisé en que** le courant d'anode circule avec une intensité différente selon la position du conteneur (3) au-dessus de la fente de découplage (10), de préférence avec l'intensité maximale lorsque le compartiment (4, 5, 6) du conteneur, devant être exposé, se trouve au milieu de la fente de découplage (10).

22. Dispositif selon la revendication 12, **caractérisé en que** la distance des conteneurs (3) entre eux sur le dispositif de convoyage correspond exactement à la distance des paires de guide d'ondes (7, 8) entre elles.

23. Dispositif selon la revendication 12, **caractérisé en que** la distance des conteneurs (3) entre eux sur le dispositif de convoyage est identique.

24. Dispositif selon la revendication 12, **caractérisé en que** les conteneurs (3) sont tous positionnés sur le dispositif de convoyage dans la même position angulaire.
